(19) Europäisches Patentamt
European Patent Office
Office européen des brevets

(11) **EP 0 570 862 B1**

(12) **EUROPEAN PATENT SPECIFICATION**

(45) Date of publication and mention
of the grant of the patent:
**10.02.1999 Bulletin 1999/06**

(51) Int Cl.[6]: **H04N 7/24**, H04N 11/04,
H04N 7/12

(21) Application number: **93107893.5**

(22) Date of filing: **14.05.1993**

(54) **Digital signal processing circuit**

Verarbeitungsschaltung für digitale Signale

Circuit de traitement de signaux-numériques

(84) Designated Contracting States:
**DE FR GB**

(30) Priority: **19.05.1992 JP 125948/92
22.04.1993 JP 95905/93**

(43) Date of publication of application:
**24.11.1993 Bulletin 1993/47**

(73) Proprietor: **MATSUSHITA ELECTRIC INDUSTRIAL
CO., LTD.
Kadoma-shi, Osaka-fu, 571 (JP)**

(72) Inventors:
• **Dosho, Shiro
Katano-shi, Osaka 576 (JP)**
• **Juri, Tatsuro
Osaka-shi, Osaka 534 (JP)**

(74) Representative: **Grünecker, Kinkeldey,
Stockmair & Schwanhäusser Anwaltssozietät
Maximilianstrasse 58
80538 München (DE)**

(56) References cited:
EP-A- 0 424 989     EP-A- 0 527 023
US-A- 4 051 516     US-A- 5 067 010

• PHILIPS RESEARCH REPORTS, vol.29, no.5,
September 1974, EINDHOVEN M.C.W. VAN
BUUL AND L.J. VAN DE POLDER 'Standards
conversion of a videophone signal with 313 lines
into a TV signal with 625 lines'
• PHILIPS RESEARCH REPORTS, vol.28, June
1973, EINDHOVEN pages 377 - 390 M.C.W. VAN
BUUL AND L.J. VAN DE POLDER 'Standards
conversion of a TV signal with 625 lines into a
videophone signal with 313 lines'
• PROCEEDINGS OF THE IEE, vol.125, no.6, June
1978 pages 591 - 598 V.G. DEVEREUX ET AL.
'Pulse-code modulation of video signals : codes
specifically designed for Pal'

## Description

The invention relates to a digital signal processing circuit for signal thinning and interpolation which are required for compressing image data of an image signal.

In case where a image signal is recorded as a digital signal on a video tape for general use, the information is required to be compressed to one tenth. In general, for compression of the image signal, which is composed of a luminance signal and colour-difference signals, the colour-difference signals are compressed.

From Philips Research Reports, vol. 28, June 1973, pages 377 to 390, a method for standard conversion of a TV signal with 625 lines into a video phone signal with 313 lines is known using two adder circuits having first inputs to which the input video signal is fed directly and having second inputs to which the video input signal is fed via a delay line. The outputs of the adder circuits are connected to the inputs of a multiplexer which outputs the thinned signal in a 313-line system.

From Philips Research Reports vol. 29, September 1974, pages 413 to 428, a respective system for reconversion of a video phone signal with 313 lines into a TV signal with 625 lines is known also making use of parallel adder circuits, a delay line and a multiplexer.

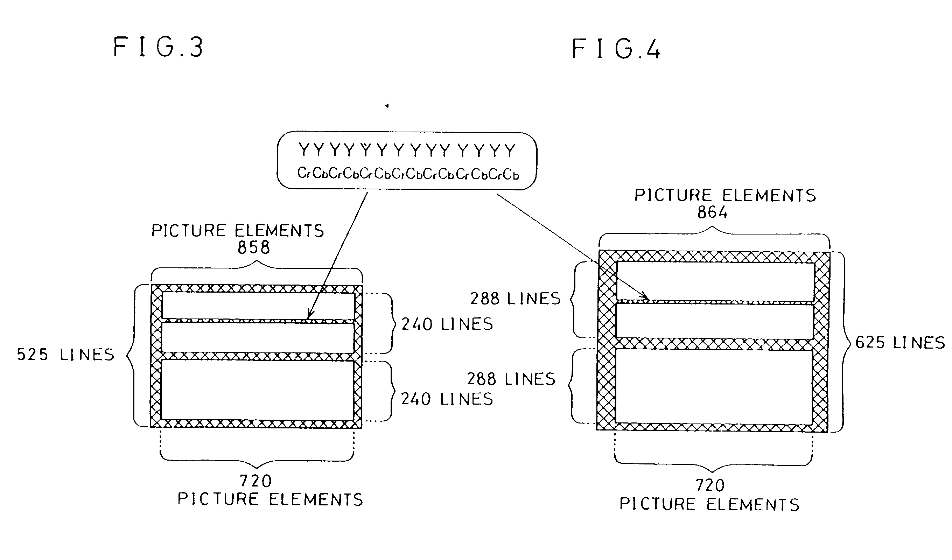

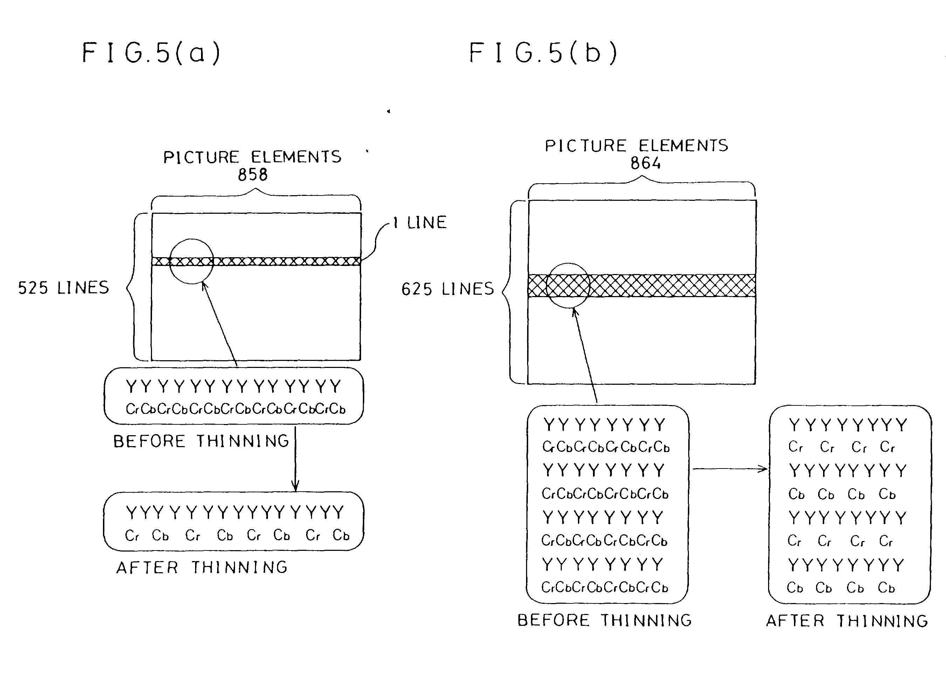

For colour TV transmission a plurality of signal transmissions are existing all over the world. The NTSC method is mainly used in the USA and Japan, whereas the PAL method is mainly used in Europe. Since each method has a different transmission system for the luminance signal and the colour-difference signals, each method requires a different compression method for compressing the image signal (mainly the colour-difference signals). The transmission systems for the luminance signal and the colour difference signals at one image in NTSC method and PAL method are respectively shown in Figs.4(a) and (b). In the respective methods, a signal at one image is generally composed of luminance signals Y and two kinds of color-difference signals Cr, Cb. The color-difference signals Cr, Cb are distributed alternatively in a horizontal direction of the image. The number of horizontal picture elements of the luminance signal Y is 858 in NTSC method and 864 in PAL method. The number of horizontal lines is 525 in NTSC method and 625 in PAL method. The image signal is generally compressed in such a manner that the color-difference signals Cr, Cb are thinned with a signal rate of 1/2, the thinned color-difference signals Cr, Cb are serially translated according to DCT (discrete cosine transform) or the like together with the luminance signal Y, then a sign indicating the serially translated signal is translated so as to be a sign whose entropy is minimum. For thinning with the signal rate of 1/2, the color-difference signals Cr, Cb are thinned in a horizontal direction of the image as shown in Fig.5(a) in NTSC method, and the color-difference signals Cr, Cb are individually thinned in a perpendicular direction at every two lines as shown in Fig.5(b) in PAL method. The reason why the color-difference signals Cr, Cb are thinned in the perpendicular direction of the image in PAL method is that it is hard to cause degradation of the quality of the image because the perpendicular lines in the image in PAL method is 100 lines more than that in NTSC method.

When the color-difference signals are thinned, a picture element value before thinning is not used directly as a color-difference signal value (picture element value) Y after thinning, but the color-difference signal value Y after thinning is obtained by reflecting three successive picture element values before thinning to the picture element value Y after thinning. A formula (1) for calculating the picture element value Y is often used.

$$Y = X_2/4 + z^{-1}X_1/2 + z^{-2}X_0/4 \qquad (1)$$

$X_n$ : picture element value of input signal
$z^{-1}$ : delay of z-field
(NTSC method : one picture element)
(PAL : one horizontal line)

In case where the thinned image signal is recorded on a tape or the like and the recorded thinned signal is regenerated, it is necessary to interpolate between the recorded color-difference signals. The picture element value Y of an interpolated color-difference signal located between the recorded color signals (thinned signals) is generally calculated with a formula (2), using successive thinned signals ($X_1$ does not exist in the formula (2) for being thinned).

$$Y = X_2/2 + z^{-2}X_0/2 \qquad (2)$$

$X_n$ : picture element value of input signal
$z^{-1}$ : delay of z-field
(NTSC method : one picture element)
(PAL method : one horizontal line)

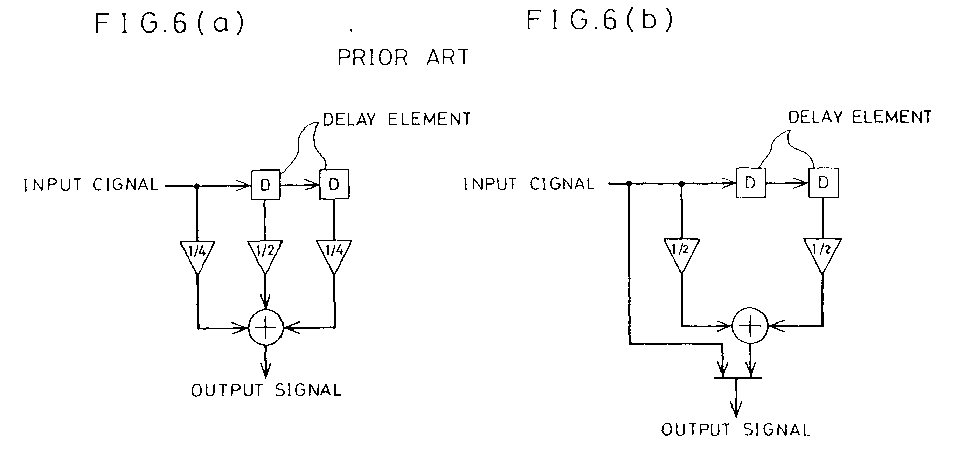

In order to put the formulae (1), (2) into practice, it is general that the input signal is delayed by two delay circuits D provided as shown in Figs.6(a) and (b).

With the constructions for signal thinning in Fig.6(a) and for signal interpolation in Fig.6(b), however, a circuit size shall be enlarged in PAL method, while a circuit size is small in NTSC method.

In detail, in NTSC method, when successive three color-difference signals are sequentially inputted, a picture element value after thinning is calculated with the formula (1) at the time because the color-difference signal is thinned in the horizontal direction of the image. Thus, only two delay circuits for one picture element (usually two D flip-flops) suffice. In case of interpolation using the signal after thinning, when two thinned signals are inputted sequentially, the picture element value after interpolation is calculated with the formula (2) at the time. Thus, only two delay circuits for one picture element suffice as well as for the thinning. On the other hand, in PAL method in which the color-difference signal is thinned in the perpendicular direction of the image, only when the color-difference signals of successive three lines are sequentially inputted, the picture element value after thinning is calculated with the formula (1). Also, for the interpolation, only when the color-difference signals of two lines after thinning are inputted sequentially, the picture element value after interpolation is calculated with the formula (2). Therefore, required are two delay circuits for memorizing and delaying the color-difference signals by one line. In detail, as shown in Fig.4, since the number of effective picture elements for one line is 720 (excluding 144 picture elements corresponding to an eclipsing region from all of 864 picture elements in one line) in PAL method, two 360-stage FIFO memory (first in first out buffer memory) are usually required for the color-difference signal Cr and the color-difference signal Cb respectively. This causes the circuit enlarged. This disadvantage is involved not only in PAL method but also a case where an image signal is thinned in the perpendicular direction for record and the thinned signal is interpolated at regeneration of the recorded image signal.

## SUMMARY OF THE INVENTION

The aforementioned Philips Research Reports already providing digital signal processing circuits for thinning or interpolating an image signal in perpendicular direction in PAL method or the like, with less FIFO memories and reduced size, it is the object of the invention to provide another such digital signal processing circuits.

To attain the object, in the present invention, in a perpendicular thinning circuit of an image signal, one-preceding value and two-preceding value of the color-difference signal are added and memorized in a single delay circuit, instead that the one-preceding value and two-preceding value thereof are individually memorized to two delay circuits. Further, in a perpendicular interpolation circuit of an image signal, an identical image signal is re-delayed by a single delay circuit, instead of delay by two delay circuits. Thus, the two delay circuits which memorizes picture elements for one line in a conventional case is reduced to one circuit, which leads to a small sized digital signal processing circuit.

In detail, a digital signal processing circuit for outputting a thinned signal of an input signal is subject matter of claim 1.

Further, in the present invention a digital signal processing circuit for outputting a thinned signal and an interpolation signal of an input signal is subject matter of claim 2.

Preferred embodiments of the invention are subject matter of the dependent claims.

The digital signal processing circuit in the present invention is used for an image signal of a television in PAL method.

Under the above construction, in the present invention, when an input signal is thinned according to switching of the multiplexer, instead that the input signal is memorized in two delay circuits, only one delay circuit memorizes an added result of delayed input signal data and the present input signal. Thus, the circuit size is reduced with only one delay circuit.

Further, the digital signal processing circuit is used as a circuit for thinning and interpolating an image signal of a television in PAL method.

In consequence, according to the digital signal processing circuit in the present invention, when an image signal is compressed and recorded by thinning in the perpendicular direction of the image, the delay circuit memorizes an added result of two delayed image signals, instead that the delay circuit merely memorizes the delayed image signal. When the thinned signal is interpolated at regeneration of the thinned image signal, the delay circuit delays and memorizes the image signal delayed by the same delay circuit. Therefore, only one delay circuit for memorizing picture elements for one line suffices, thus reducing the circuit size. Particularly, when perpendicular thinning and interpolation for an image signal are conducted in a single circuit, the construction is simplified because of common use of electronic components such as the delay circuit.

The above object and novel features of the present invention will appear more fully during the following description with reference to the accompanying drawings.

## BRIEF DESCRIPTION OF THE DRAWINGS

The accompanying drawings show preferred embodiments of the present invention, in which:

Fig.1 is a block diagram showing a construction of a digital signal processing circuit according to a first embodiment of the present invention;
Fig.2 is a block diagram showing a construction of a digital signal processing circuit according to a third embodiment of the present invention;
Figs.3 and 4 are explanatory drawings respectively showing an image signal form in NTSC method and PAL method;
Figs.5(a) and (b) are explanatory drawings respectively showing an image signal thinning method in NTSC method and PAL method;
Figs.6(a) and (b) are block diagrams respectively showing conventional three-tap thinning and interpolation methods for an image signal;
Fig.7 is an explanatory drawing showing a circuit operation in the first embodiment of the present invention;
Fig.8 is a block diagram showing a whole construction of a digital signal processing circuit in a third embodiment of the present invention;

Fig.9 is a block diagram showing a signal thinning/interpolation circuit which composes a part of the digital signal processing circuit in the third embodiment of the present invention;

Figs.10 and 11 are tables respectively showing relations between a control signal and a perpendicular line of an effective image in the digital signal processing circuit at thinning and at interpolation in the third embodiment of the present invention.

Fig.12 is a table showing a flow of an image signal in the digital signal processing circuit in the fourth embodiment of the present invention.

PREFERRED EMBODIMENTS OF THE PRESENT INVENTION

Description is made below about preferred embodiments of the present invention with reference to the accompanying drawings.

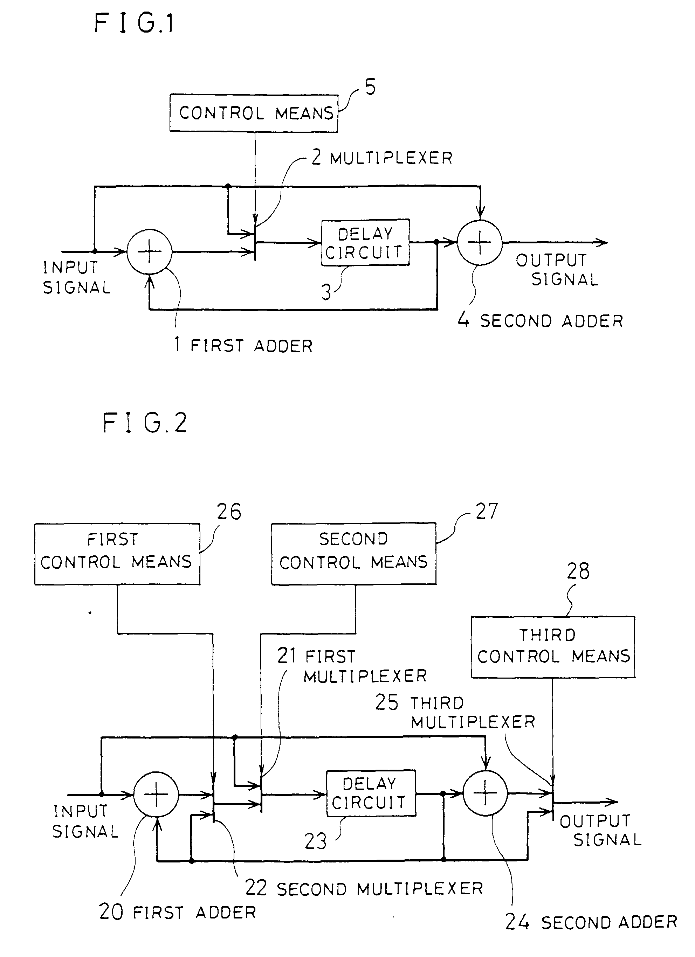

Fig.1 is a block diagram showing a construction of a digital signal thinning circuit according to a first embodiment of the present invention. Reference numeral 1 indicates a first adder. 2 is a multiplexer. 3 is a delay circuit. 4 is a second adder. 5 is a control means for controlling the multiplexer 2. The first adders 1 add an input signal and an output of the delay circuit 3. The multiplexer 2 receives the input signal and an output of the first adder 1 and selects to output one of the input signal and the output of the first adder 1. An output of the multiplexer 2 is inputted to the delay circuit 3. The delay circuit 3 memorizes the input at every input and outputs a previously memorized signal. An output of the delay circuit 3 is inputted to the first adder 1 and the second adder 4. The second adder adds the output of the delay circuit 3 and the input signal. The control means 5 alternatively switches the multiplexer 2 to output one of the input signal and the output of the first adder 1.

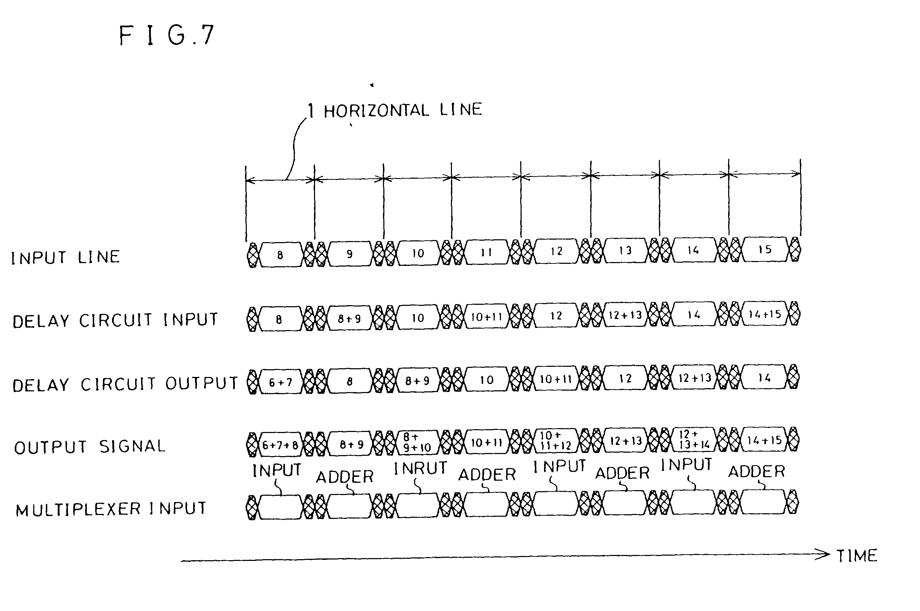

Described next is an operation for thinning an image signal in a perpendicular direction to an image, using the digital signal thinning circuit, with reference to Fig.7. As to "MULTIPLEXER INPUT" in Fig.7, "INPUT" means an input signal and "ADDER" means the first adder 1 in Fig.1.

As to a first horizontal line (eighth line in Fig. 7), the multiplexer 2 is set to output the input signal, so that an image data of the eighth line is memorized to the delay circuit 3. The output of the digital signal thinning circuit, i.e., the output of the second adder 4 is an added result of a signal stored in the delay circuit 3 and the input signal. In case with no storage in the delay circuit 3, the output of the second adder 4 is an input signal itself of the eighth line. Usually, as shown in Fig.7, the added result of the image data of a sixth line and a seventh line is stored, thus an added result of the added result and the input signal is outputted.

As to a next horizontal line (ninth line in Fig.7), the delay circuit 3 outputs the image data of the eighth line to the first adder 1 and the second adder 4. The first adder 1 adds the image data of the eighth line from the delay circuit 3 and the image data of the ninth line. Since the multiplexer 2 is switched to output the output of the first adder 1, an added result of the image data of the eighth line from the first adder 1 and the input signal of the ninth line is inputted to the delay circuit 3, and the output of the digital signal thinning circuit, i.e., the output of the second adder 4 is an added result of the image data of the eighth line and the input signal of the ninth line. Yet, the output is not used as a thinned signal.

As to a next line (tenth line in Fig.7), the multiplexer 2 is set to output the input signal. Accordingly, the delay circuit 3 memorizes the input signal of the tenth line and outputs an added result of the image data of the eighth line and the ninth line. Then, the second adder 4 outputs an added result of the added result of the image data of the eighth line and the ninth line from the delay circuit 3 and an input signal of the tenth line. The data is outputted as a thinned signal. Thus, as inferred from Fig.7, unless the data is the first data of the image, the data memorized in the delay circuit 3 is the data of the present line or an added result of the data of the present line and the data of a one-line preceding line at every two lines. Accordingly, the digital signal thinning circuit outputs the added result of the image data of three lines at every two lines, thus the image signal is thinned in a perpendicular direction to the image.

In the first embodiment, for the sake of simplicity, an example of a thinning filter in which the input signals of successive three perpendicular lines are merely added is described. However, when multipliers are provided before each input of the first adder 1 and the second adder 2, a three-tap thinning filter having an optional coefficient is contemplated, in which, for example, a coefficient of a two-line preceding input signal $X_0$ is set to 1/4, that of a one-line preceding input signal $X_1$ is set to 1/4 and that of a present input signal $X_2$ is set to 1/4, as the calculation formula (1) showing a picture element value after thinning.

Fig.2 is a block diagram showing a construction of a digital signal thinning/interpolation circuit according to the second embodiment of the present invention. In Fig.2, reference numeral 20 indicates a first adder. 21 is a first multiplexer 21. 22 is a second multiplexer. 23 is a delay circuit. 24 is a second adder. 25 is a third multiplexer. 26 is a first control means for controlling the second multiplexer. 27 is a second control means for controlling the first multiplexer 21. 28 is a third control means for controlling the third multiplexer 25.

In detail, for a signal thinning process using the circuit, the second multiplexer 22 is fixed to output the output of the first adder 20, and the third multiplexer 25 is fixed to output the output of the second adder 24. In this case, the first adder 20 serves as the first adder 1 in Fig.1, the first multiplexer 21 serves as the multiplexer 2 in Fig.1, the delay circuit 23 serves as the delay circuit 3 in Fig.1, and the second adder 24 serves as the second adder 4 in Fig.1. The first multiplexer 21 is alternatively switched at every input of the input signal to output one of the input signal and the output of the second multiplexer 22.

On the other hand, for a signal interpolation process using the circuit, the second multiplexer 22 is fixed to output the output of the delay circuit 23. When an input signal is inputted, the first multiplexer 21 is switched to output the input signal and the third multiplexer 25 is switched to output the output of the second adder 24. When a next input signal is inputted, the first multiplexer 21 is switched to output the output of the second multiplexer 22 and the third multiplexer 25 is switched to output the output of the delay circuit 23. The switchings are repeated.

With the above operation, the digital signal processing circuit in the second embodiment operates the same operation as the thinning circuit in the first embodiment and in Fig.1 for the signal thinning process, and alternatively operates as an interpolation circuit for the signal interpolation process.

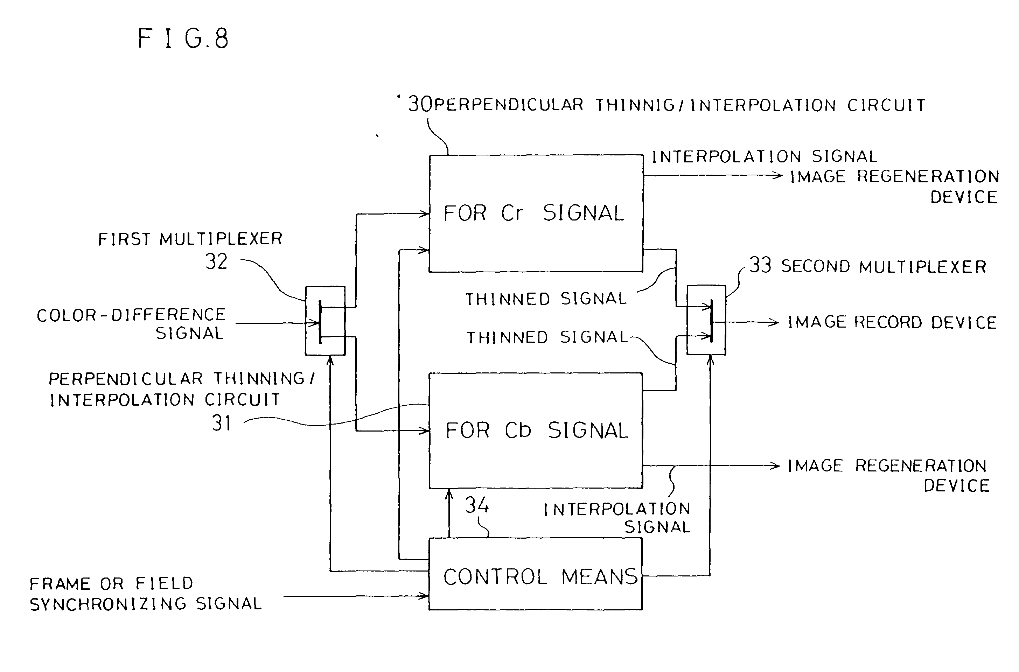

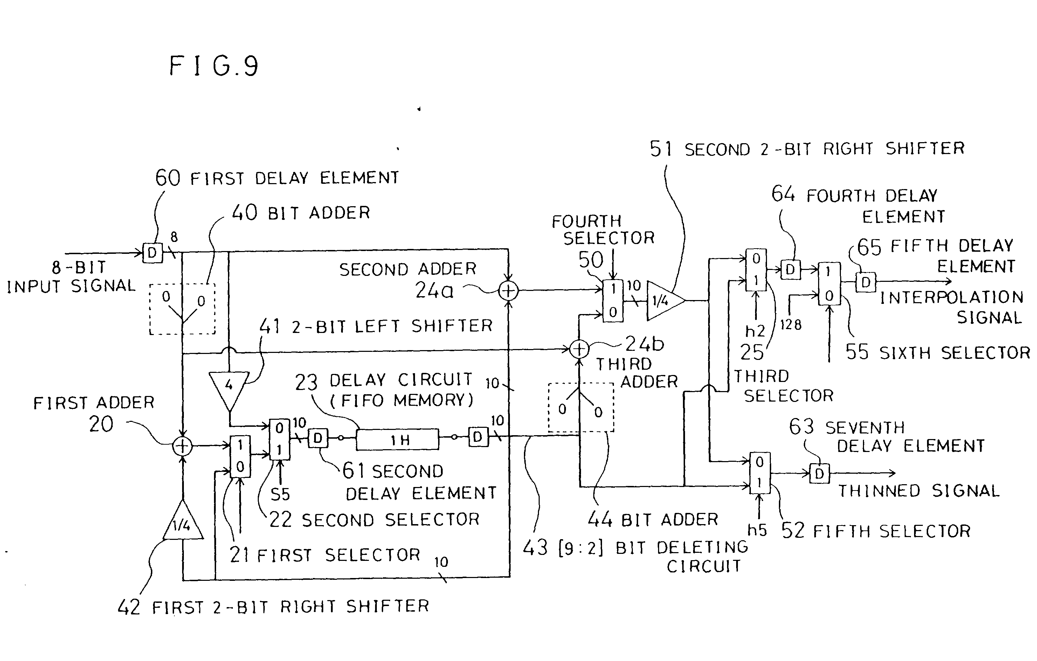

Figs.8 and 9 show the third embodiment of the present invention which illustrates an image signal thinning/interpolation circuit. According to the circuit in Figs. 8 and 9, an 8-bit image signal is thinned based on a formula (3):

$$Y=(z^{-2}X_0+2 \times z^{-1}X_1+X_2)/4 \qquad (3)$$

and is interpolated based on a formula:

$$Y=(z^{-2}X_0+X_2)/2 \qquad (4)$$

In Fig.8, reference numeral 30 indicates a perpendicular thinning/interpolation circuit for a color-difference signal Cr. The detailed construction thereof is shown in Fig.9. 31 indicates a perpendicular thinning/ interpolation circuit for a color-difference signal Cb which has the same construction as the circuit 30 for the color-difference signal Cr and is shown in Fig.9.

Reference numeral 32 indicates a first multiplexer which receives the color-difference signals Cr, Cb as input signals and selects therebetween. When the color-difference signal Cr is selected, the first multiplexer 32 outputs the color-difference signal Cr to the perpendicular thinning/interpolation circuit 30 for the color-difference signal Cr. When the color-difference signal Cb is selected, the first multiplexer 32 outputs the color-difference signal Cb to the perpendicular thinning/interpolation circuit 31 for the color-difference signal Cb. 33 is a second multiplexer which receives a thinned signal outputted from the circuit 30 for the color-difference signal Cr and a thinned signal outputted from the circuit 31 for the color-difference signal Cb as input signals, and selects one of the thinned signals to output to an image record device for record. Interpolation signals outputted from the two perpendicular thinning/interpolation circuits 30, 31 are outputted directly to an image replay device.

Reference 34 indicates control means which receives a frame or field synchronizing signal of an image. Provided inside thereof (not shown) are a horizontal counter for counting in a horizontal direction the number of picture elements in one line for one image according to the inputted synchronizing signal and a perpendicular counter for counting the number of perpendicular lines at every time when the horizontal counter counts up all picture elements (864) in one line. The control means 34 controls first and second multiplexer 32, 33 and two perpendicular thinning/interpolation circuits 30, 31 based on the count of horizontal and perpendicular counters therein.

Described next is about a perpendicular thinning/interpolation circuit 30 for the color-difference signal Cr shown in Fig.9. Since the other perpendicular thinning/interpolation circuit 31 for the color-difference signal Cb has the same construction, the explanation thereof is dispensed with. Since the perpendicular thinning/interpolation circuit 30 in Fig.9 has a concrete construction of the perpendicular thinning /interpolation circuit in Fig.2, the respective identical reference number are allotted to the respective identical elements.

In Fig.8, reference numeral 20 indicates a first adder. 21 is a first multiplexer (herein after multiplexer is referred to as selector). 22 is a second selector. 23 is a delay circuit composed of a FIFO memory. 24a is a second adder for thinning. 24b is a second adder for interpolation. 25 is a third selector.

Reference numeral 40 indicates a bit adder for adding a most significant bit and a least significant bit to an 8-bit input signal. 41 is a 2-bit left shifter for shifting the input signal two bits to left. 42 is a first 2-bit right shifter for shifting a signal outputted from the delay circuit 23 two bits to right. 43 is a bit deleting circuit for deleting lower two bits of the signal outputted from the delay circuit 23 for multiplying by 1/4. 44 is a bit adder for adding a most significant bit and a least significant bit to an output from the bit deleting circuit 43.

Reference numeral 50 indicates a fourth selector for thinning and interpolation for selecting one of an output from the second adder 24a for thinning and an output from the second adder 24b for interpolation. 51 is a second 2-bit right shifter for shifting an output of the fourth selector 50 two bits to right. 52 is a fifth selector for selecting one of an output from the fourth selector which is shifted two bits to right by the second 2-bit right shifter 51 and a signal that the lower two bits of an output of the delay circuit 23 are deleted by the bit deleting circuit 43. An output of the fifth selector 52 is inputted to the second selector 33 in Fig.8 as a thinned signal.

Reference numeral 55 indicates a sixth selector for a horizontal eclipsing. When an interpolation signal outputted from the third selector 25 is within an eclipsing region shown in Fig.4, the sixth selector 55 is switched to "128" side whose input is a complement of "2" to cut the output of the interpolation signal based on an output of the horizontal counter in the control means 34 in Fig.8, and outputs "0" instead of the interpolation signal. An output of the sixth selector 55 is inputted to the image regeneration device as the interpolation signal.

In Fig.9, reference numerals 60-65 are delay elements as latch circuits for synchronization. Numerals such as "8", "10" in Fig.9 express bit numbers of the signals near the numerals.

Described next is an operation of the perpendicular thinning/interpolation circuit 30 for the color-difference signal Cr in Fig.9.

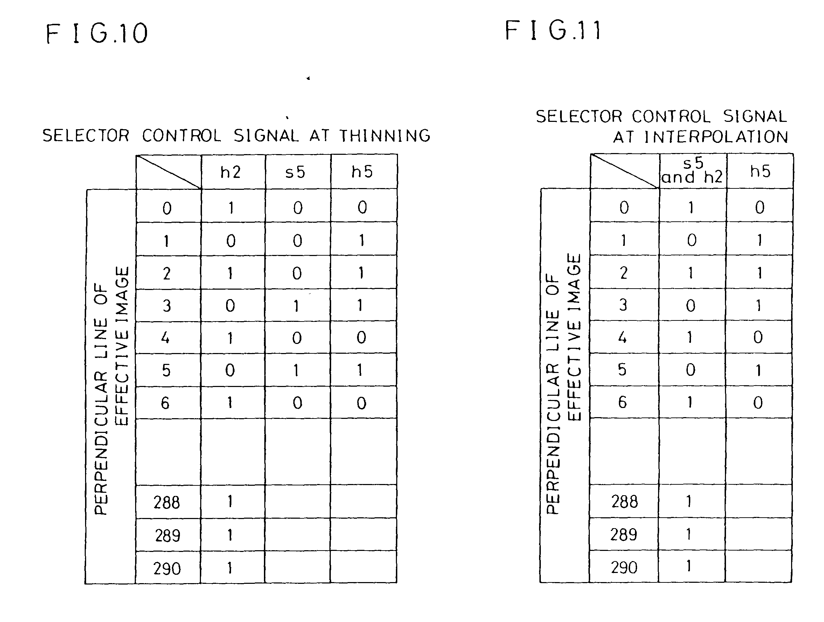

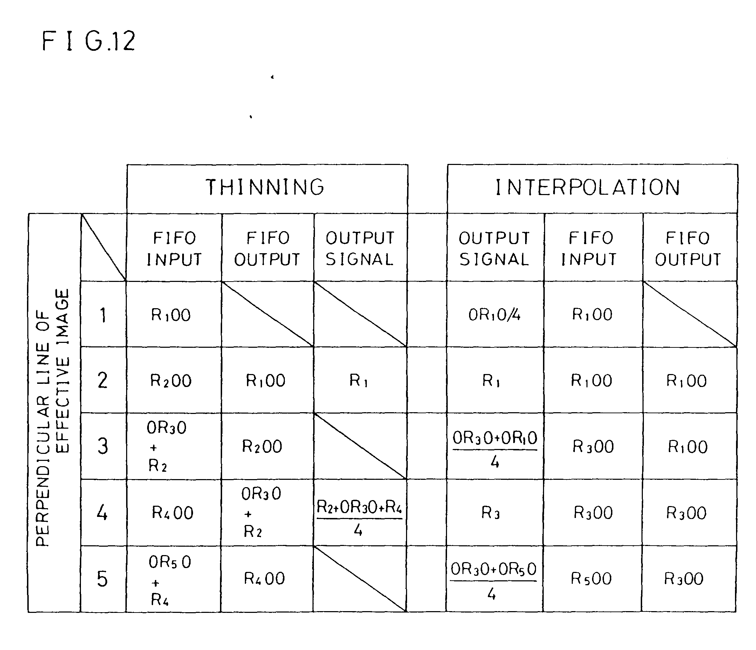

In case of the thinning process, the first selector 21 and the fourth selector 50 are switched to HIGH, so that the first selector 21 outputs the output of the first adder 20 and the fourth selector 50 outputs the output of the second adder 24a for thinning. Suppose that a control signal for the second selector 22 is s5, that for the third selector 25 is h2 and that for the fifth selector 52 is h5. Relation between the control signals for the selectors and the perpendicular line of an effective image of an input signal for the thinning process is indicated in Figs.10. At the thinning process in Fig.12, the thinned signal is required at even numbered lines, such as second line, fourth line.

A signal flow is described with reference to Figs.9, 10 and 12. Initially, a color-difference signal Cr of the first line which is a perpendicular line of the image is inputted. The input is expressed as R1 and an input in an n-th perpendicular line is expressed as Rn of 8-bit data signal. In the first line, the control signal s5 for the second selector 22 is "0", R1 becomes R100 of 10-bit signal by shifting two bits to left by the 2-bit left shifter 41, namely is multiplied by 4, then inputted and memorized to the delay circuit 23.

In the second line, since the control signal s5 is "0", as well as the above, R2 is multiplied by 4 to be R200, and inputted and memorized to the delay circuit 23. The delay circuit 23 outputs R100 which is multiplied by 4. The output of the delay circuit 23 has 8 bits from ninth bit to second bit by deleting the lower two bits thereof by the bit deleting circuit 43, namely becomes R1 which is multiplied by 1/4. Since the control signal h5 for the fifth selector 52 is "1" in first to third lines, R1 from the bit deleting circuit 43 is outputted from the fifth selector 52 through a later-stage latch circuit 63.

In the third line, R200 which is multiplied by 4 is outputted from the delay circuit 23, and is multiplied by 1/4 by the first 2-bit right shifter 42 to be R2. R2 is then inputted to the first adder 20. The first adder 20 adds R2 and 0R30 that R3 is one-bit-shifted to left by multiplying by 2 which is outputted from the bit adder 40. Since the control signal s5 is "1", the added result 0R30+R2 is outputted and memorized to the delay circuit 23 through the first selector 21. In the third line, after R200 outputted from the delay circuit 23 is multiplied by 1/4 by the bit deleting circuit 43 to be R2, R2 is outputted from the fifth selector 52 via the later-stage latch circuit 63. In the third line, R2 is outputted as a thinned signal to the image record device via the second multiplexer 33 in Fig.8, but the image record device bars the input of the thinned signal of the third line which is an odd numbered line.

In the fourth line, since the control signal h5 for the fifth selector 52 is "0", the second adder 24a for thinning adds 0R30+R2 outputted from the delay circuit 23 (an added result of 0R30 which is multiplied by 2 and R2) and the input signal R4. The added signal 0R30+R2+R4 passes through the fourth selector 50, is multiplied by 1/4 by the second 2-bit right shifter 51, then is outputted through the fifth selector 52 as a thinned signal. In other words, the signal (0R30+R2+R4)/4 outputted from the fifth selector 52 is 1/4-times R2, 1/2-times R3 and 1/4-times R4. Accordingly, the circuit in Fig.9 in the fourth embodiment contemplates a perpendicular thinning of the image signal based on the formula (3).

Also, the interpolation process with the circuit in Fig.9 is described with reference to Figs.9, 11 and 12, as well as in the thinning process. The first selector 21 is switched to output the output of the delay circuit 23, and the fourth selector 50 is switched to output the output of the second adder 24b for interpolation.

First, in the first line, since the control signal s5 for the second selector 22 is "0", the second selector 22 is switched to output the output of the 2-bit left shifter 41. The input signal R1 is multiplied by 4 by the 2-bit left shifter 41 to be R100, as well as in the thinning process, then is inputted and memorized to the delay circuit 23.

In the second line, since the control signal h2 for the third selector 25 is "1", the third selector 25 is switched to output the output of the delay circuit 23. The output signal R100 of the delay circuit 23 becomes R1 by deleting the lower two bits thereof by the bit deleting circuit 43, then outputted through third and sixth selectors 25, 55. For the interpolation process, a horizontal eclipsing is inserted to the output signal as the image signal, using the sixth selector 55. In the second line, since the control signal s5 for the second selector 22 is "1" and the second selector 22 is switched to output the output of the first selector 21, i.e., the output of the delay circuit 23, the output R100 of the delay circuit 23 (R1 is multiplied by 4) is inputted to the delay circuit 23 via first and second selectors 21, 22. For the interpolation process, in the second line, there is no input signal to the circuit usually.

In the third line, since the control signal h2 for the third selector 25 is "0", the third selector 25 is switched to output the output of the fourth selector 50, i.e., the output of the second adder 24b for interpolation. Thus, the output signal is a signal that the output of the second adder 24b for interpolation is multiplied by 1/4 by the second 2-bit right shifter 51. In other words, the output signal R100 from the delay circuit 23 becomes R1 by deleting the lower two bits thereof by the bit deleting circuit 43, becomes 0R10 by adding the most significant bit and the least significant bit thereto by the bit adder 44, then is inputted to the second adder 24b for interpolation. Then, the adder 24b adds the signal 0R10 and 0R30 that the most significant bit and the lease significant bit are added to the input signal R3 by the bit adder 40. The added result is multiplied by 1/4 by the second 2-bit right shifter 51 to be (R1+R3)/2, i.e., an added.value of 1/2 of R1 and 1/2 of R3, then outputted as the interpolation signal.

As described above, with the circuit in Figs.8 and 9 in the third embodiment of the present invention, a perpendicular thinning circuit and a perpendicular interpolation circuit applied in PAL method are easily combined using only one delay circuit 23 for memorizing the picture elements for one line.

In the above description, the present invention is applied to a perpendicular thinning circuit and a perpendicular interpolation circuit used in PAL method. However, the present invention is not limited to the circuit in PAL method but also applicable to a case where an image signal is recorded by thinning in the perpendicular direction, such as in a high definition television.

## Claims

1. A digital signal processing circuit for outputting a thinned signal of an input signal, comprising:

   a first adder (1) and a second adder (4) to first inputs of each of which the input signal is inputted,

   a delay circuit (3), the output of which is connected to second inputs of each of the first and second adders (1,4),

   a multiplexer (2) having first and second inputs to the first of which the output of the first adder (1) is inputted, and

   control means (5) for controlling said multiplexer (2) to selectively output one of the signals existent at its inputs,

   **characterized in that**

   said input signal is inputted to the second input of said multiplexer (2),

   the output of said multiplexer (2) is inputted to said delay circuit (3), and

   the second adder (4) is outputting the thinned signal.

2. A digital signal processing circuit for outputting a thinned signal and an interpolation signal of an input signal, comprising:

   a first adder (20) and a second adder (24) to first inputs of each of which the input signal is inputted,

   a delay circuit (23), the output of which is connected to second inputs of each of said first and second adders (20,24) and to one of the inputs of

   a third multiplexer (25) for outputting the processed signal,

   a first multiplexer (21) having a first input connected to the first input of said first adder (20) and having its output connected to the input of said delay circuit (23),

   a second multiplexer (22) having a first input connected to the output of the first adder (20),

   the output of said second adder (24) being connected to the second input of said third multiplexer (25),

   first control means (26) for switching the second multiplexer (22) to selectively output one of the signals present at its inputs,

   second control means (27) for switching the first multiplexer (21) to selectively output one of the signals present at its inputs, and

   third control means (28) for switching the third multiplexer (25) to selectively output one of the signals present at its inputs,

   **characterised in that**

   the second input of said first multiplexer (21) is connected to the output of said second multiplexer (22)

   the output of said second adder (24) is connected to the second input of said third multiplexer (25),

   said third control means (28) switches the third multiplexer (25) to output the output of the second adder (24) when the first multiplexer (21) is switched to output the input signal and switches the third multiplexer (25) to output the output of the delay circuit (23) when the first multiplexer (21) is switched to output the output of the second multiplexer (22),

wherein the output of the third multiplexer (25) is the thinned signal when the second multiplexer (22) is switched to output the output of the first adder (20) and the output of the third multiplexer (25) is the interpolation signal when the second multiplexer (22) is switched to output the output of the delay circuit (23).

3. The digital signal processing circuit as claimed in claim 1 or 2, wherein the digital signal processing circuit is used for an image signal of a television in PAL method.

4. The digital signal processing circuit as claimed in claim 2 or 3, further comprising a multiplexer for inhibiting an interpolation signal from being outputted when the interpolation signal is within an eclipsing region of an image.

5. The digital signal processing circuit as claimed in one of claims 1 to 3, wherein the control means for controlling the multiplexer includes a counter working based on a frame synchronizing signal or a field synchronizing signal of a TV image signal.

6. The digital signal processing circuit as claimed in one of claims 1 to 3, further comprising an image record device for recording the thinned signal and for inhibiting an unnecessary thinned signal from being inputted.

7. The digital signal processing circuit as claimed in one of claims 1 to 3, further comprising a signal thinning circuit or a signal interpolation circuit for thinning or interpolating two kinds of color-difference signals out of the image signal individually.

**Patentansprüche**

1. Digitalsignalverarbeitungsschaltung zum Ausgeben eines ausgedünnten Signals eines Eingangssignals, enthaltend:

eine erste Addierschaltung (1) und eine zweite Addierschaltung (4), denen jeweils an ersten Eingängen das Eingangssignal eingegeben wird,

eine Verzögerungsschaltung (3), deren Ausgang mit zweiten Eingängen jeder der ersten und zweiten Addierschaltungen (1, 4) verbunden ist,

einen Multiplexer (2), der erste und zweite Eingänge aufweist, deren erstem die Ausgabe der ersten Addierschaltung (1) eingegeben ist, und

eine Steuereinrichtung (5) zum Steuern des Multiplexers (2) um selektiv eines der Signale auszugeben, die an seinen Eingängen anliegen,

dadurch gekennzeichnet, daß

das Eingangssignal dem zweiten Eingang des Multiplexers (2) eingegeben ist,

die Ausgabe des Multiplexers (2) in die Verzögerungsschaltung (3) eingegeben ist, und

die zweite Addierschaltung (4) das ausgedünnte Signal ausgibt.

2. Digitale Verarbeitungsschaltung zum Ausgeben eines ausgedünnten Signals und eines Interpolationssignals eines Eingangssignals, enthaltend:

eine erste Addierschaltung (20) und eine zweite Addierschaltung (24), denen das Eingangssignal jeweils an ersten Eingängen eingegeben ist,

eine Verzögerungsschaltung (23), deren Ausgang mit zweiten Eingängen jeder der ersten und zweiten Addierschaltungen (20, 24) verbunden ist, sowie fernen verbunden ist mit

einem dritten Multiplexer (25) zum Ausgeben des verarbeiteten Signals,

einen ersten Multiplexer (21), der einen ersten Eingang hat, der mit dem ersten Eingang der ersten Addierschaltung (20) verbunden ist, und dessen Ausgang mit dem Eingang der Verzögerungsschaltung (23) verbunden ist,

einen zweiten Multiplexer (22), der einen ersten Eingang hat, der mit dem Ausgang der ersten Addierschaltung (20) verbunden ist,

wobei der Ausgang der zweiten Addierschaltung (24) mit dem zweiten Eingang des dritten Multiplexers (25) verbunden ist,

eine erste Steuereinrichtung (26) zum Umschalten des zweiten Multiplexers (22), um wahlweise eines der an seinen Eingängen vorhandenen Signale auszugeben,

eine zweite Steuereinrichtung (27) zum Umschalten des ersten Multiplexers (21), um wahlweise eines der an seinen Eingängen vorhandenen Signale auszugeben, und

eine dritte Steuereinrichtung (28), um den dritten Multiplexer (25) umzuschalten, um wahlweise eines der an seinen Eingängen vorhandenen Signale auszugeben,

dadurch gekennzeichnet, daß

der zweite Eingang des ersten Multiplexers (21) mit dem Ausgang des zweiten Multiplexers (22) verbunden ist,

der Ausgang der zweiten Addierschaltung (24) mit dem zweiten Eingang des dritten Multiplexers (25) verbunden ist,

die dritte Steuereinrichtung (28) den dritten Multiplexer (25) umschaltet, um die Ausgabe der zweiten Addierschaltung auszugeben, wenn der erste Multiplexer (21) so geschaltet ist, daß er das Eingangssignal ausgibt, und den dritten Multiplexer (25) schaltet, um die Ausgabe der Verzögerungsschaltung (23) auszugeben, wenn der erste Multiplexer (21) so geschaltet ist, daß er die Ausgabe des zweiten Multiplexers (22) ausgibt,

wobei die Ausgabe des dritten Multiplexers (25) das ausgedünnte Signal ist, wenn der zweite Multiplexer (22) so geschaltet ist, daß er die Ausgabe der ersten Addierschaltung (20) ausgibt, und die Ausgabe des dritten Multiplexers (25) das Interpolationssignal ist, wenn der zweite Multiplexer (22) so geschaltet ist, daß er die Ausgabe der Verzögerungsschaltung (23) ausgibt.

3.  Digitalsignalverarbeitungsschaltung nach Anspruch 1 oder 2, bei der die digitale Signalverarbeitungsschaltung für ein Fernsehbildsignal im PAL-Verfahren verwendet wird.

4.  Digitalsignalverarbeitungsschaltung nach Anspruch 2 oder 3, weiterhin enthaltend einen Multiplexer zur Sperrung der Ausgabe eines Interpolationssignals, wenn das Interpolationssignal innerhalb eines Verdunkelungsbereichs eines Bildes liegt.

5.  Digitalsignalverarbeitungsschaltung nach einem der Ansprüche 1 bis 3, bei der die Steuereinrichtung zur Steuerung des Multiplexers einen Zähler enthält, der auf der Grundlage eines Halbbildsynchronsignals oder eines Vollbildsynchronsignals des Fersehbildsignals arbeitet.

6.  Digitalsignalverarbeitungsschaltung nach einem der Ansprüche 1 bis 3, weiterhin enthaltend eine Bildaufzeichnungsvorrichtung zum Aufzeichnen des ausgedünnten Signals und zum Sperren der Eingabe eines unnötigen ausgedünnten Signals.

7.  Digitalsignalverarbeitungsschaltung nach einem der Ansprüche 1 bis 3, weiterhin enthaltend eine Signalausdünnungsschaltung oder eine Signalinterpolationsschaltung zum individuellen Ausdünnen oder Interpolieren zweier Arten von Farbdifferenzsignalen aus dem Bildsignal.

**Revendications**

1.  Circuit de traitement de signaux numériques destiné à fournir en sortie un signal à volume diminué d'un signal en entrée, comprenant :

    un premier additionneur (1) et un second additionneur (4) à des premières entrées de chacun desquels le signal en entrée est appliqué en entrée,
    un circuit à retard (3), dont la sortie est reliée à des secondes entrées de chacun des premier et second additionneurs (1, 4),
    un multiplexeur (2) comportant des première et seconde entrées, à la première desquelles la sortie du premier additionneur (1) est appliquée en entrée, et
    un moyen de commande (5) destiné à commander ledit multiplexeur (2) de façon à ce qu'il fournisse sélectivement en sortie l'un des signaux présents au niveau de ses entrées,

    caractérisé en ce que

    ledit signal en entrée est appliqué en entrée à la seconde entrée dudit multiplexeur (2),
    la sortie dudit multiplexeur (2) est appliquée en entrée audit circuit à retard (3), et
    le second additionneur (4) fournit en sortie le signal à volume diminué.

2.  Circuit de traitement de signaux numériques destiné à fournir en sortie un signal à volume diminué ainsi qu'un signal d'interpolation d'un signal en entrée, comprenant :

    un premier additionneur (20) et un second additionneur (24) à des premières entrées de chacun desquels le signal en entrée est appliqué en entrée,
    un circuit à retard (23), dont la sortie est reliée à des secondes entrées de chacun desdits premier et second additionneurs (20, 24) ainsi qu'à l'une des entrées d'
    un troisième multiplexeur (25) destiné à fournir en sortie le signal traité,

un premier multiplexeur (21) comportant une première entrée reliée à la première entrée dudit premier additionneur (20) et dont la sortie est reliée à l'entrée dudit circuit à retard (23),

un second multiplexeur (22) comportant une première entrée reliée à la sortie du premier additionneur (20),

la sortie dudit second additionneur (24) étant reliée à la seconde entrée dudit troisième multiplexeur (25),

un premier moyen de commande (26) destiné à commuter le second multiplexeur (22) de façon qu'il fournisse sélectivement en sortie l'un des signaux présents au niveau de ces entrées,

un second moyen de commande (27) destiné à commuter le premier multiplexeur (21) de façon qu'il fournisse sélectivement en sortie l'un des signaux présents au niveau de ses entrées, et

un troisième moyen de commande (28) destiné à commuter le troisième multiplexeur (25) de façon qu'il fournisse sélectivement en sortie l'un des signaux présents au niveau de ses entrées,

caractérisé en ce que

la seconde entrée dudit premier multiplexeur (21) est reliée à la sortie dudit second multiplexeur (22),

la sortie dudit second additionneur (24) est reliée à la seconde entrée dudit troisième multiplexeur (25),

ledit troisième moyen de commande (28) commute le troisième multiplexeur (25) de façon qu'il fournisse en sortie la sortie du second additionneur (24) lorsque le premier multiplexeur (21) est commuté de façon à fournir en sortie le signal en entrée, et commute le troisième multiplexeur (25) de façon qu'il fournisse en sortie la sortie du circuit à retard (23) lorsque le premier multiplexeur (21) est commuté de façon à fournir en sortie la sortie du second multiplexeur (22),

dans lequel la sortie du troisième multiplexeur (25) est le signal à volume diminué lorsque le second multiplexeur (22) est commuté de façon à fournir en sortie la sortie du premier additionneur (20), et la sortie du troisième multiplexeur (25) est le signal d'interpolation lorsque le second multiplexeur (22) est commuté de façon à fournir en sortie la sortie du circuit à retard (23).

3. Circuit de traitement de signaux numériques selon la revendication 1 ou 2, dans lequel le circuit de traitement de signaux numériques est utilisé pour un signal d'image de télévision du procédé PAL.

4. Circuit de traitement de signaux numériques selon la revendication 2 ou 3, comprenant en outre un multiplexeur destiné à empêcher la fourniture en sortie d'un signal d'interpolation lorsque le signal d'interpolation se trouve à l'intérieur d'une région de masquage d'une image.

5. Circuit de traitement de signaux numériques selon l'une des revendications 1 à 3, dans lequel le moyen de commande destiné à commander le multiplexeur comprend un compteur fonctionnant sur la base d'un signal de synchronisation de trame ou d'un signal de synchronisation de balayage de trame d'un signal d'image de télévision.

6. Circuit de traitement de signaux numériques selon l'une des revendications 1 à 3, comprenant en outre un dispositif d'enregistrement d'image destiné à enregistrer le signal à volume diminué et à empêcher l'application en entrée d'un signal à volume diminué inutile.

7. Circuit de traitement de signaux numériques selon l'une des revendications 1 à 3, comprenant en outre un circuit de diminution en volume de signal ou un circuit d'interpolation de signal destiné à la diminution en volume ou à l'interpolation de deux types de signaux de différence de couleur à partir du signal d'image, individuellement.

FIG.1

FIG.2

# FIG.3

# FIG.4

YYYYYYYYYYYYYY
$C_rC_bC_rC_bC_rC_bC_rC_bC_rC_bC_rC_bC_rC_b$

PICTURE ELEMENTS
858

PICTURE ELEMENTS
864

288 LINES

240 LINES

525 LINES

288 LINES

240 LINES

625 LINES

720
PICTURE ELEMENTS

720
PICTURE ELEMENTS

EP 0 570 862 B1

FIG.5(a)

FIG.5(b)

# FIG.6(a)

PRIOR ART

# FIG.6(b)

DELAY ELEMENT

INPUT CIGNAL

D → D

1/4   1/2   1/4

⊕

OUTPUT SIGNAL

DELAY ELEMENT

INPUT CIGNAL

D → D

1/2   1/2

⊕

OUTPUT SIGNAL

EP 0 570 862 B1

# FIG.7

1 HORIZONTAL LINE

INPUT LINE 　8　9　10　11　12　13　14　15

DELAY CIRCUIT INPUT 　8　8+9　10　10+11　12　12+13　14　14+15

DELAY CIRCUIT OUTPUT 　6+7　8　8+9　10　10+11　12　12+13　14

OUTPUT SIGNAL 　6+7+8　8+9　8+9+10　10+11　10+11+12　12+13　12+13+14　14+15

MULTIPLEXER INPUT 　INPUT ADDER INPUT ADDER INPUT ADDER INPUT ADDER

TIME

EP 0 570 862 B1

# F I G.8

EP 0 570 862 B1

# FIG.9

FIG.9

60 FIRST DELAY ELEMENT

40 BIT ADDER

51 SECOND 2-BIT RIGHT SHIFTER

64 FOURTH DELAY ELEMENT

65 FIFTH DELAY ELEMENT

8-BIT INPUT SIGNAL

SECOND ADDER 24a

FOURTH SELECTOR 50

INTERPOLATION SIGNAL

41 2-BIT LEFT SHIFTER

24b THIRD ADDER

h2 25

55 SIXTH SELECTOR

FIRST ADDER 20

23 DELAY CIRCUIT (FIFO MEMORY)

THIRD SELECTOR

63 SEVENTH DELAY ELEMENT

1H

61 SECOND DELAY ELEMENT

THINNED SIGNAL

S5

22 SECOND SELECTOR

44 BIT ADDER

h5 52 FIFTH SELECTOR

21 FIRST SELECTOR

43 [9:2] BIT DELETING CIRCUIT

42 FIRST 2-BIT RIGHT SHIFTER

EP 0 570 862 B1

17

FIG.11

SELECTOR CONTROL SIGNAL
AT INTERPOLATION

| | s5 and h2 | h5 |
|---|---|---|
| 0 | 1 | 0 |
| 1 | 0 | 1 |
| 2 | 1 | 1 |
| 3 | 0 | 1 |
| 4 | 1 | 0 |
| 5 | 0 | 1 |
| 6 | 1 | 0 |
| | | |
| 288 | 1 | |
| 289 | 1 | |
| 290 | 1 | |

PERPENDICULAR LINE OF
EFFECTIVE IMAGE

FIG.10

SELECTOR CONTROL SIGNAL AT THINNING

| | h2 | s5 | h5 |
|---|---|---|---|
| 0 | 1 | 0 | 0 |
| 1 | 0 | 0 | 1 |
| 2 | 1 | 0 | 1 |
| 3 | 0 | 1 | 1 |
| 4 | 1 | 0 | 0 |
| 5 | 0 | 1 | 1 |
| 6 | 1 | 0 | 0 |
| | | | |
| 288 | 1 | | |
| 289 | 1 | | |
| 290 | 1 | | |

PERPENDICULAR LINE OF
EFFECTIVE IMAGE

18

F I G.12

| PERPENDICULAR LINE OF EFFECTIVE IMAGE | THINNING | | | INTERPOLATION | | |
|---|---|---|---|---|---|---|
| | FIFO INPUT | FIFO OUTPUT | OUTPUT SIGNAL | OUTPUT SIGNAL | FIFO INPUT | FIFO OUTPUT |
| 1 | $R_1 00$ | | | $0R_1 0/4$ | $R_1 00$ | |
| 2 | $R_2 00$ | $R_1 00$ | $R_1$ | $R_1$ | $R_1 00$ | $R_1 00$ |
| 3 | $0R_3 0 + R_2$ | $R_2 00$ | | $\dfrac{0R_3 0 + 0R_1 0}{4}$ | $R_3 00$ | $R_1 00$ |
| 4 | $R_4 00$ | $0R_3 0 + R_2$ | $\dfrac{R_2 + 0R_3 0 + R_4}{4}$ | $R_3$ | $R_3 00$ | $R_3 00$ |
| 5 | $0R_5 0 + R_4$ | $R_4 00$ | | $\dfrac{0R_3 0 + 0R_5 0}{4}$ | $R_5 00$ | $R_3 00$ |

EP 0 570 862 B1